## Europäisches Patentamt
## European Patent Office
## Office européen des brevets

(19)

(11) Numéro de publication: **0 084 278**
**B1**

(12)

# FASCICULE DE BREVET EUROPÉEN

(45) Date de publication du fascicule du brevet:
15.01.86

(21) Numéro de dépôt: **82401993.9**

(22) Date de dépôt: **28.10.82**

(51) Int. Cl.⁴: **H 01 R 13/506**

(54) **Connecteur destiné à être fixé sur un boitier.**

(30) Priorité: **26.11.81 FR 8122128**

(43) Date de publication de la demande:
**27.07.83 Bulletin 83/30**

(45) Mention de la délivrance du brevet:
**15.01.86 Bulletin 86/3**

(84) Etats contractants désignés:
**DE GB IT**

(56) Documents cité:
**DE-A-1 465 126**
**FR-A-2 138 892**
**FR-A-2 148 699**
**FR-A-2 312 133**
**US-A-3 711 813**

(73) Titulaire: **DUCELLIER & Cie, Echat 950, F-94024 Créteil Cedex (FR)**

(72) Inventeur: **Dumas, Pierre, 23, Les Sarrailleres, F-63570 Brassac Les Mines (FR)**
Inventeur: **Ray, Michel, 7, route des Barthes Vergoughon, F-93360 Arvant (FR)**

(74) Mandataire: **Habert, Roger, VALEO Service Propriété Industrielle 21, rue Auguste Blanqui, F-93406 Saint- Ouen (FR)**

EP 0 084 278 B1

## Description

La présente invention concerne un connecteur notamment destiné à être fixé sur un motoréducteur et comportant des moyens de fixation constitués par des ailettes déformables élastiquement, obtenues de moulage avec un boîtier renfermant les connexions, dans le prolongement des parois latérales dudit boîtier.

Il est connu un connecteur de ce type dans le brevet français FR 2 312 133, mais la fixation d'un tel connecteur s'effectue par encliquetage élastique des ailettes déformables pourvues à leur extrémité de crochets aptes à s'introduire élastiquement par compression dans des lumières correspondantes ménagées dans le corps du carter du motoréducteur et cela sur un de ses plans.

L'inconvénient d'un tel mode de fixation d'un connecteur réside essentiellement dans le fait qu'il faille pratiquer des ouvertures dans le corps du carter, ce qui est nuisible à l'étanchéité de l'ensemble et intolérable dans le cas d'une application du motoréducteur au lève-vitre de portière de véhicule, particulièrement soumis au ruissellement d'eau.

De plus, dans de telles applications, il est nécessaire d'obtenir un ensemble motoréducteur d'un encombrement en épaisseur très réduit d'où l'intérêt à adopter un motoréducteur dont le carter est constitué par deux demi-coquilles conférant à l'ensemble une structure plate et à disposer le connecteur sur le champ du carter pour ne pas nuire audit encombrement.

La présente invention a pour but de pouvoir répondre à ces impératifs d'étanchéité et d'encombrement et de plus propose un connecteur ne modifiant pas la structure du carter quel que soit le connecteur demandé. Le motoréducteur est ainsi standard, étanche et plat.

A cet effet, l'invention concerne un connecteur notamment destiné à être fixé sur un motoréducteur et comportant des moyens de fixation constitués par des ailettes déformables élastiquement, obtenues de moulage avec un boîtier renfermant les connexions, dans le prolongement des parois latérales dudit boîtier, caractérisé en ce que les ailettes élastiques chevauchent au montage les demi-coquilles d'un carter étanche du motoréducteur et s'escamotent au passage d'au moins deux ergots disposés en relief de part et d'autre des demi-coquilles jusqu'à ce que ceux-ci débouchent dans deux lumières correspondantes ménagées dans lesdites ailettes pour s'y encliqueter.

La description qui va suivre en fonction des dessins annexés fera mieux comprendre comment l'invention peut être réalisée.

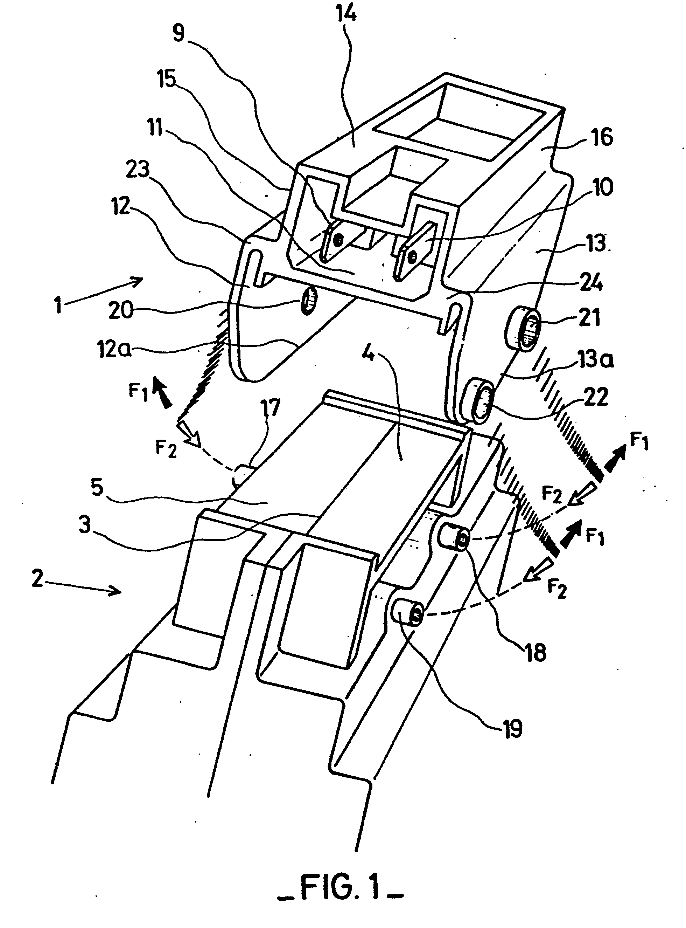

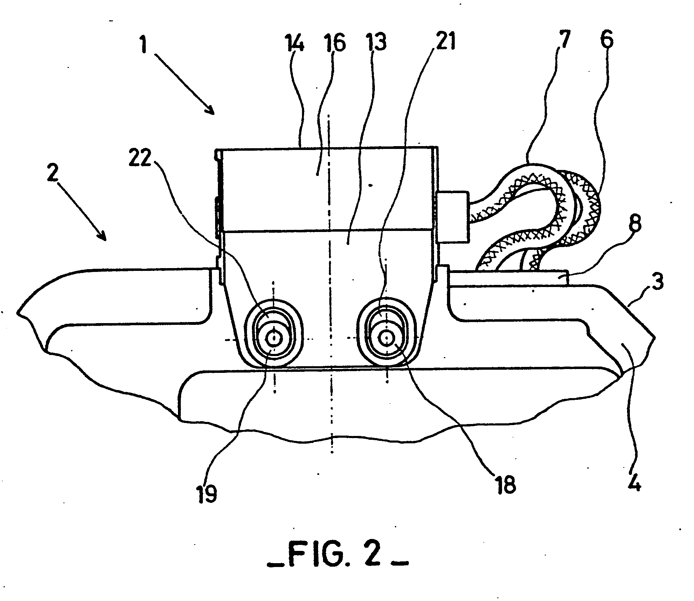

La figure 1 représente une vue en perspective d'un connecteur suivant l'invention, en cours de montage sur un motoréducteur. La figure 2 est une vue en plan du connecteur après montage et raccordement électrique avec le motoréducteur, représenté poartiellement.

Le connecteur 1 représenté sur les figures est notamment destiné à être fixé sur un motoréducteur 2 en vue du raccordement électrique de ce dernier à un circuit de commande d'essuie-glace ou de lève-glace de véhicule automobile.

Le motoréducteur 2 est constitué de manière connue par un carter 3 formé par deux demi-coquilles 4 et 5 à l'intérieur desquelles est logé (non représentés) un moteur d'entraînement alimenté électriquement par deux balais en contact avec le collecteur d'un induit tournant dont l'arbre se prolonge par une vis sans fin entraînant une roue de réduction, l'amenée de courant aux balais s'effectuant par deux conducteurs 6 et 7, traversant le carter 3 par l'intermédiaire d'un passe câble 8 et dont les extrémités libres sont soudées sur deux fiches de connexion mâles 9 et 10 sourmoulées dans le connecteur 1 et débouchent dans un logement 11 de forme correspondante à un connecteur femelle (non représenté) disposé à l'extrémité du faisceau du circuit de commande du véhicule.

Le connecteur 1 ainsi raccordé électriquement au motoréducteur 2 est fixé sur ce dernier grâce à des moyens qui sont constitués par deux ailettes 12 et 13 déformables élastiquement, obtenues avec le boîtier 14 du connecteur 1 au cours d'une même opération de moulage d'une matière plastique et prolongeant ses parois latérales 15 et 16 pour former un cavalier dont les branches latérales, en l'occurence les ailettes 12 et 13 chevauchent les demi-coquilles 4 et 5 et s'escamotent élastiquement dans le sens F1 au passage des ergots 17, 18 et 19, dont l'un 17 est disposé sur la demi-coquille 5 et les deux autres 18 et 19 sur la demi-coquille 4 à proximité du bord supérieur du carter 3. Cette assymétrie des ergots 17, 18 et 19 a pour but d'éviter le basculement du connecteur 1 sur le motoréducteur 2.

L'escamotage élastique des branches ou ailettes 12 et 13 a ainsi lieu jusqu'à ce que les ergots 17, 18 et 19 débouchent simultanément, pour s'y encliqueter, dans trois lumières correspondantes 20, 21 et 22 ménagées à proximité des bords inférieurs 12a et 13a des ailettes 12 et 13. Les ailettes 12 et 13 reprennent alors leur position initiale dans le sens F2 grâce à l'élasticité conférée par la matière plastique, élasticité accrue en rehaussant les charnières 23 et 24 ce qui permet un accroissement de la longueur des ailettes 12 et 13 donc de leur élasticité.

## Revendication

Connecteur notamment destiné à être fixé sur un motoréducteur et comportant des moyens de fixation constitués par des ailettes (12, 13) déformables élastiquement, obtenues de moulage avec un boîtier (14) renfermant les connexions, dans le prolongement des parois latérales dudit boîtier, caractérisé en ce que les ailettes élastiques (12) et (13) chevauchent au montage les demi-coquilles (4) et (5) d'un carter étanche (3) du motoréducteur et s'escamotent au passage d'au moins deux ergots (17) et (18) disposés en relief de part et d'autre des demi-coquilles (4) et (5) jusqu'à ce que ceux-ci débouchent dans deux lumières correspondantes (20) et (21) ménagées dans lesdites ailettes (12) et (13) pour s'y encliqueter.

**Patentanspruch**

Verbinder, insbesondere zur Befestigung an einem Getriebemotor, mit Befestigungsmitteln in Form von elastisch verformbaren Stegen (12, 13), die in Verlängerung der Seitenwandungen eines die Verbindungen umschließenden Verbindergehäuses (14) an diesem angeformt sind, dadurch gekennzeichnet, daß die elastischen Stege (12, 13) bei der Montage die Halbschalen (4, 5) eines dichten Gehäuses (3) des Getriebemotors übergreifen, und beim Überfahren wenigstens von zwei auf den beiden Seiten der Halbschalen (4, 5) angeordneten erhabenen Vorsprüngen (17) ausweichen, bis diese Vorsprünge in zwei korrespondirende in den genannten Stegen (12 und 13) angebrachte Öffnungen (20, 21) eingreifen und dort verrasten.

**Claim**

A connector intended in particular to be fastened to a motor/reduction unit comprising fastening means constituted by resiliently deformable flanges (12, 13), obtained by moulding with a housing (14) containing the connections, in the extension of the lateral walls of the housing, characterised in that on assembly the resilient flanges (12, 13) straddle the half-shells (4, 5) of a leak-tight casing (3) of the motor/reduction unit and are displaced during the passage of at last two projections (17, 18) disposed to project on either side of the half-shells (4, 5) until these projections pass into two corresponding slots (20, 21) provided in the flanges (12, 13) to become snap-engaged therein.

_FIG. 1_

_FIG. 2 _